# EUROPEAN PATENT APPLICATION

(11) **EP 3 531 631 A1**
(43) Date of publication of application: **28.08.2019**
(21) Application number: 16921129.9
(22) Date of filing: 11.11.2016
(51) Int. Cl.: H04L 12/70, H04L 12/803, H04L 12/841, H04L 12/835, H04L 12/801, H04L 29/06

(54) **DATA TRANSMISSION METHOD AND APPARATUS**

(71) Applicant: Huawei Technologies Co., Ltd., Longgang Shenzhen, Guangdong 518129 (CN)
(72) Inventor: PANG, Lingli, Shenzhen Guangdong 518129 (CN); ZHENG, Xiaoxiao, Shenzhen Guangdong 518129 (CN)
(74) Representative: Epping - Hermann - Fischer
(86) International application number: PCT/CN2016/105518
(87) International publication number: WO 2018/086076

(57) **Abstract**

The present invention relates to a data transmission method and an apparatus, and the method includes: receiving, by a first network node, quick user datagram protocol internet connection (QUIC) data packets sent by a second network node; sorting, by the first network node, the QUIC data packets, to obtain a sorting result; and sending, by the first network node, the QUIC data packets to a third network node based on the sorting result. In this way, when air interface resources between the first network node and the third network node are relatively insufficient, the second network node sorts the received QUIC data packets, and sequentially sends the QUIC data packets to the third network node based on the sorting result. This may greatly reduce a delay in receiving the QUIC data packet by the third network node, and further avoid disorder of the QUIC data packets in the first network node.

## Description

### TECHNICAL FIELD

Embodiments of the present invention relate to the field of communications technologies, and in particular, to a data transmission method and an apparatus.

### BACKGROUND

Transmission control protocol (Transmission Control Protocol, TCP)/internet protocol (Internet Protocol, IP) is a basis of the Internet, and a frequently-used transport layer protocol in a network includes the TCP and the UDP. The UDP is more lightweight than the TCP, so that using the UDP usually provides higher transmission efficiency during data transmission. However, error parity bits of the UDP are fewer, and consequently, reliability of transmitting data by using the UDP is lower than reliability of transmitting data by using the TCP. Based on features of the TCP and the UDP, the UDP is usually applied to applications such as a game, streaming media, and voice over internet protocol (Voice over Internet Protocol, VoIP), and the TCP is applied to most applications such as a web page, an email, and remote login.

Quick user datagram protocol internet connection (Quick UDP Internet Connection, QUIC) is a low-delay Internet transport layer protocol that is formulated by Google and that is based on the user datagram protocol (User Datagram Protocol, UDP). The QUIC combines advantages of the TCP and the UDP, and features a low delay and high reliability during data transmission. In addition, the QUIC may further be applied to a protocol with higher security. In addition, the QUIC additionally includes functions such as congestion control and automatic retransmission, and therefore provides higher reliability than the UDP.

To improve a throughput of data transmission, when using the QUIC to send a data packet to a terminal, a server may send data to a network side device in a multi-stream transmission manner. In a wireless network environment, the network side device sends the received data packets that are sent by the server to the terminal by using a mobile communications network such as 3G/4G/5G. However, when radio resources between the network side device and the terminal are limited, in the prior art, the network side device cannot effectively forward the plurality of data packets that are sent by the server to the terminal in a timely manner, and consequently, a delay in receiving the data packet by the terminal may be significantly increased.

### SUMMARY

Embodiments of the present invention provide a data transmission method and an apparatus to resolve the foregoing problems in the prior art.

According to a first aspect, an embodiment of the present invention provides a data transmission method, including:
receiving, by a first network node, quick user datagram protocol internet connection (QUIC) data packets sent by a second network node;
sorting, by the first network node, the QUIC data packets to obtain a sorting result; and
sending, by the first network node, the QUIC data packets to a third network node based on the sorting result.

In this way, when air interface resources between the first network node and the third network node are relatively insufficient, the second network node sorts the received QUIC data packets, and sequentially sends the QUIC data packets to the third network node based on the sorting result. This may greatly reduce a delay in receiving the QUIC data packet by the third network node, and further avoid disorder of the QUIC data packets in the first network node.

In a possible design, the sorting, by the first network node, the QUIC data packets specifically includes:
obtaining, by the first network node, attribute information corresponding to connections of the QUIC data packets; and
sorting, by the first network node, the connections based on the attribute information, where
the attribute information includes one or a combination of the following items:
   an identifier of a QUIC connection, a transmission delay requirement of a service transmitted through the QUIC connection, and a service type of the service transmitted through the QUIC connection.

In a possible design, the sorting, by the first network node, the QUIC data packets specifically includes:
obtaining, by the first network node, sequence numbers (SNs) corresponding to the QUIC data packets of a same connection; and
sorting, by the first network node, the QUIC data packets in ascending order of the sequence numbers.

In a possible design, the first network node includes a first protocol layer and a second protocol layer, the first protocol layer is used to sort the data packets, the second protocol layer is used to send the sorted QUIC data packets, and the sending, by the first network node, the QUIC data packets to a third network node based on the sorting result specifically includes:
receiving, by the first protocol layer, instruction information sent by the second protocol layer, where the instruction information is used to instruct the first protocol layer to send QUIC data packets requested by the second protocol layer to the second protocol layer;
sending, by the first protocol layer, the QUIC data packets to the second protocol layer based on the instruction information; and
receiving, by the second protocol layer, the QUIC data packets sent by the first protocol layer, and sending the received QUIC data packets to the third network node in a sequence in which the first protocol layer sends the QUIC data packets.

In a possible design, the receiving, by a first network node, quick user datagram protocol internet connection (QUIC) data packets sent by a second network node specifically includes:
receiving, by the first network node, the QUIC data packets that are sent by the second network node and that are from a plurality of connections, where each connection is identified by a unique CID; and
the sorting, by the first network node, the QUIC data packets includes:
   obtaining, by the first network node, a moment at which each QUIC data packet reaches the first network node; and sorting, by the first network node, the plurality of connections in a sequence of moments at which first QUIC data packets of all connections reach the first network node, to determine a connection corresponding to the QUIC data packet that first reaches the first network node as a first connection, and determine a CID corresponding to the first connection as a target CID;
   sorting, by the first network node, QUIC data packets corresponding to the target CID in ascending order of SNs; and
   using, by the first network node, a result obtained after the QUIC data packets corresponding to the target CID are sorted as the sorting result.

In a possible design, the method further includes:
determining, by the first network node, whether a received data packet is the QUIC data packet; and
the determining, by the first network node, whether a received data packet is the QUIC data packet includes:
   determining, by the first network node, that an IP protocol for the received data packet is the user datagram protocol (UDP);
   determining, by the first network node after determining that the IP protocol for the data packet is the UDP, whether sequence numbers corresponding to a same CID in the data packets are consecutive; and
   determining, by the first network node after determining that the sequence numbers corresponding to the CID are consecutive, that the received data packet is the QUIC data packet.

In a possible design, the determining, by the first network node, whether a received data packet is the QUIC data packet includes:
obtaining, by the first network node, an IP address of the received data packet;
determining, by the first network node, whether the IP address of the data packet is in a UDP port list; and
determining, by the first network node after determining that the IP address of the data packet is in a QUIC protocol address list, that the received data packet is the QUIC data packet.

In a possible design, after determining that a buffer of the QUIC data packet exceeds a preset threshold, the first network node sends instruction information to the second network node, so that the second network node stops sending the QUIC data packet to the first network node based on the instruction information, or the second network node decreases a rate of sending the QUIC data packet to the first network node; or
the first network node sets buffer space of a preset capacity for the QUIC data packet sent by the second network node; or
the first network node discards the QUIC data packet based on the sorting result in descending order of sequence numbers.

According to a second aspect, an embodiment of the present invitation further provides a first network node, including:
a receiver, configured to receive quick user datagram protocol internet connection (QUIC) data packets sent by a second network node;
a processor, configured to sort the QUIC data packets, to obtain a sorting result; and
a transmitter, configured to send the QUIC data packets to a third network node based on the sorting result.

In a possible design, the receiver is further configured to obtain attribute information respectively corresponding to connections of the QUIC data packets; and the processor is further configured to sort the connections based on the attribute information, where the attribute information includes one or a combination of the following items: an identifier of a QUIC connection, a transmission delay requirement of a service transmitted through the QUIC connection, and a service type of the service transmitted through the QUIC connection.

In a possible design, the receiver is further configured to obtain sequence numbers (SNs) corresponding to the QUIC data packets of a same connection; and
the processor is further configured to sort the QUIC data packets in ascending order of the sequence numbers.

In a possible design, the first network node includes a first protocol layer and a second protocol layer, the first protocol layer is used to sort the data packets, and the second protocol layer is used to send the sorted QUIC data packets;
the receiver is further configured to receive instruction information sent by the second protocol layer, where the instruction information is used to instruct the first protocol layer to send QUIC data packets requested by the second protocol layer to the second protocol layer;
the transmitter is further configured to send the QUIC data packets to the second protocol layer based on the instruction information; and
the receiver is further configured to: receive the QUIC data packets sent by the first protocol layer, and send the received QUIC data packets to the third network node in a sequence in which the first protocol layer sends the QUIC data packets.

In a possible design, the receiver is further configured to receive the QUIC data packets that are sent by the second network node and that are from a plurality of connections, where each connection is identified by a unique CID;
the processor is further configured to: obtain a moment at which each QUIC data packet reaches the first network node; and sort, by the first network node, the plurality of connections in a sequence of moments at which first QUIC data packets of all connections reach the first network node, to determine a connection corresponding to the QUIC data packet that first reaches the first network node as a first connection, and determine a CID corresponding to the first connection as a target CID;
the processor is further configured to sort QUIC data packets corresponding to the target CID in ascending order of SNs; and
the processor is further configured to use a result obtained after the QUIC data packets corresponding to the target CID are sorted as the sorting result.

In a possible design, the processor is further configured to determine whether a received data packet is the QUIC data packet;
the processor is further configured to determine that an IP protocol for the received data packet is the user datagram protocol (UDP);
the processor is further configured to determine, after determining that the IP protocol for the data packet is the UDP, whether sequence numbers corresponding to a same CID in the data packets are consecutive; and
the processor is further configured to determine, after determining that the sequence numbers corresponding to the CID are consecutive, that the received data packet is the QUIC data packet.

In a possible design, the receiver is further configured to obtain an IP address of the received data packet;
the processor is further configured to determine whether the IP address of the data packet is in a UDP port list; and
the processor is further configured to determine, after determining that the IP address of the data packet is in a QUIC protocol address list, that the received data packet is the QUIC data packet.

In a possible design, the transmitter is further configured to send, after determining that a buffer of the QUIC data packet exceeds a preset threshold, instruction information to the second network node, so that the second network node stops sending the QUIC data packet to the first network node based on the instruction information, or the second network node decreases a rate of sending the QUIC data packet to the first network node; or
the processor is further configured to set buffer space of a preset capacity for the QUIC data packet sent by the second network node; or
the processor is further configured to discard the QUIC data packet based on the sorting result in descending order of sequence numbers.

### BRIEF DESCRIPTION OF DRAWINGS

FIG. 1 is a schematic diagram of a data transmission scenario according to an embodiment of the present invention;
FIG. 2 is a schematic diagram of data transmission according to another embodiment of the present invention;
FIG. 3 is a flowchart of a data transmission method according to another embodiment of the present invention;
FIG. 4 is a flowchart of step S320 in FIG. 3;
FIG. 5 is another flowchart of step S320 in FIG. 3;
FIG. 6 is a flowchart of step S330 in FIG. 3;
FIG. 7 is another flowchart of step S320 in FIG. 3;
FIG. 8 is another flowchart of step S320 in FIG. 3;
FIG. 9 is a flowchart of a data transmission method according to another embodiment of the present invention;
FIG. 10 is a flowchart of step S340 in FIG. 3;
FIG. 11 is another flowchart of step S340 in FIG. 3;
FIG. 12 is a schematic diagram of data sorting according to an embodiment of the present invention; and
FIG. 13 is a schematic structural diagram of a first network node according to an embodiment of the present invention.

### DESCRIPTION OF EMBODIMENTS

The following describes the embodiments of the present invention with reference to accompanying drawings.

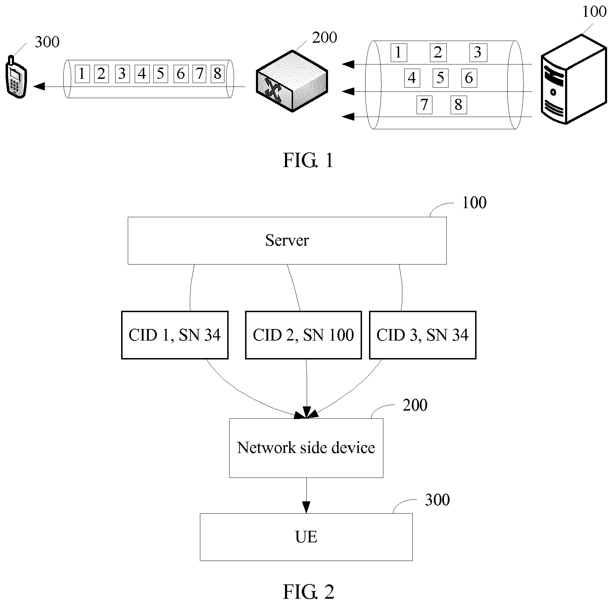

FIG. 1 is a schematic diagram of a data exchange scenario between a server 100, a network side device 200, and a terminal 300. As shown in FIG. 1, the server 100 uses the QUIC to send data packets to the network side device 200 in a multiplex manner. The network side device 200 receives the plurality of data packets sent by the server 100, and forwards the received data packets to the terminal 300 by using an air interface resource such as 3G/4G/5G. The 3rd generation partnership project (3rd Generation Partnership Project, 3GPP) protocol is usually used between the network side device 200 and the terminal 300.

For example, as shown in FIG. 1, when the server 100 sends QUIC data packets to the network side device 200, the server 100 classifies the QUIC data packets that need to be sent into three parts and send them to the network side device 200. The QUIC data packet sent by the server 100 carries a connection identifier (Connection Identity, CID) and a sequence number (Sequence Number, SN), the CID is an identifier of a connection established between the terminal and the server 100, and the SN is a transmission number of each QUIC data packet on the connection. When the network side device 200 receives the plurality of QUIC data packets sent by the server 100, if there are sufficient air interface resources between the network side device 200 and the terminal 300, the network side device 200 may quickly forward the plurality of QUIC data packets sent by the server 100 to the terminal 300. However, once the air interface resources between the network side device 200 and the terminal 300 are relatively insufficient, the QUIC data packets that are sent from the server 100 to the network side device 200 may be buffered in the network side device 200 to wait for resource sending. This may significantly increase a delay in receiving, by the terminal 300, the QUIC data packets sent by the network side device 200. In addition, when the air interface resources between the network side device 200 and the terminal 300 are relatively insufficient, the QUIC data packets that are buffered in the network side device 200 are out-of-order, and consequently, further, the terminal 300 cannot receive in a timely manner, the QUIC data packets that are sent by the server 100 by using the network side device 200. This increases the delay.

It should be noted that the CID is a number of a connection between the network side device 200 and the server 100. The CID is used to identify a name, a type, or the like of the server 100 or an application, and may further be used to identify a service type. In other embodiments of the present invention and subsequent QUIC evolution, another parameter having a same function as the CID may also be used to replace the CID.

Therefore, the present invention provides a data transmission method and an apparatus to resolve the foregoing problems in the prior art.

With reference to FIG. 1, when the network side device 200 receives the QUIC data packets sent by the server 100, CIDs carried in the QUIC data packets may be the same or different. For example, when the server 100 is a server group, or the server 100 includes servers for different services/applications, each server may have one CID. Alternatively, when the server 100 includes only one server, but the server may provide a plurality of types of services, different services may also have different CIDs. However, QUIC data packets corresponding to a same CID are separately corresponding to one SN that is not duplicate within a specific range. The SN represents a transmission sequence of the QUIC data packet, and a range of an SN of a data packet may be determined based on a quantity of bits occupied by the SN, as shown in FIG. 2.

In this embodiment of the present invention, that the network side device 200 sends the QUIC data packet through only one connection between the terminal and the server 100 (namely, one QUIC data stream) is used as an example for description.

When the network side device 200 receives the QUIC data packets sent by the server 100, to reduce a delay in receiving the QUIC data packets on a terminal side when radio air interface resources between the network side device 200 and the terminal 300 are insufficient, in this embodiment of the present invention, when receiving the QUIC data packets sent by the server 100, the network side device 200 sorts the received QUIC data packets, and sends the QUIC data packets to the terminal 300 based on a sorting result. This manner may reduce a delay caused by disorder of the data packets in a transmission process, and improve user service experience.

Specifically, an LTE system is used as an example. The data packets sent by the server 100 are all transmitted by using a same radio bearer. The network side device 200 includes a first protocol layer and a second protocol layer. The first protocol layer is a packet data convergence protocol (Packet Data Convergence Protocol, PDCP) protocol layer, and the second protocol layer is a protocol layer under the PDCP such as a radio link control (Radio Link Control, RLC) protocol layer and/or a MAC layer, or a physical layer. When receiving the QUIC data packets sent by the server 100, the first protocol layer sorts the QUIC data packets in ascending order of SNs of the QUIC data packets. It should be noted that a range of a size of the SN is determined based on a quantity of bits of the SN. For example, an SN is 0 bits, and a range of the SN is 0 to 255. When SNs are sorted in ascending order, a case in which the SN ends at 255, and starts from 0 again may occur. In this case, 0 should be sorted behind 255. Therefore, it needs to be determined whether the SN jumps to a new start in sorting. In a round, SNs are sorted in ascending order, and next round of SNs are sorted behind the previous round of SNs regardless of a size of a sequence number. The round herein includes a first value to a last value of the SN.

Wireless transmission is used between the network side device 200 and the terminal 300, and therefore, the network side device 200 needs to temporarily buffer the received data packets when radio resources are relatively insufficient, and cannot send the QUIC data packets that are sent by the server 100 to the terminal 300 in real time. Therefore, when sorting the QUIC data packets in a buffer, the network side device 200 tries to send the QUIC data to the terminal 300 in a sequence in which the server 100 sends the QUIC data packets. This may avoid a case in which the terminal 300 cannot receive the QUIC data packets that are sent by the server 100 in a sequence due to out-of-order sending, causing a processing delay at an application layer, and may reduce an excessive delay in receiving the QUIC data packet by the terminal 300.

Therefore, after sorting the QUIC data packets that are sent by the server 100, the first protocol layer sequentially sends the sorted QUIC data packets to the second protocol layer based on a sorting result. The second protocol layer delivers the QUIC data packets to a bottom layer of the network side device 200 in the sequence in which the first protocol layer sends the QUIC data packets, and sequentially sends the QUIC data packets to the terminal 300.

In addition, when the network side device 200 receives the QUIC data packets sent by the server 100, the first protocol layer of the network side device 200 may further send the QUIC data packets based on the instruction information sent by the second protocol layer. Specifically, the first protocol layer receives the instruction information sent by the second protocol layer. The instruction information includes specific QUIC data packets that the second protocol layer currently needs to receive, a quantity of QUIC data packets that the second protocol layer needs to receive, or the like. Alternatively, the first protocol layer may further perform evaluation based on a size of a buffer of the second protocol layer, and send QUIC data packets to the second protocol layer based on the evaluation result.

It should be noted that in this patent application of the present invention, a manner of classifying the protocol layers of the network side device 200 is merely an example. To specifically describe an operation that the network side device needs to perform, especially for an LTE system, a possible protocol layer further includes a MAC layer and a physical layer, and a function of sorting the QUIC data packets may be implemented at a PDCP layer or another protocol layer, or exists as a separate functional entity. In addition, in actual application, the sorting function of the network side device (the foregoing operation of the first protocol layer), data processing, and sending function (the foregoing operation of the second protocol layer) may be completed by one or more protocol layers or functional entities. This is not limited herein.

In the present invention, sorting of the QUIC data packets is intended for a scenario in which the data packets are buffered in the network side device 200 and cannot be delivered in a timely manner. If air interface resources are sufficient in this case, the QUIC data packets sent by the server 100 may be sent to the terminal 300 in a timely manner. Therefore, the QUIC data packets do not need to be buffered on the network side, or only a few QUIC data packets need to be buffered. As a result, the sorting function of the network side device is not needed. A specific occasion of enabling the sorting function of the network side device depends on an algorithm of the network side, and this is not limited herein. Only an operation of the network side device 200 that is performed if the sorting function is enabled is described herein.

In another embodiment of the present invention, the network side device 200 may further determine, based on a using status of the air interface resources between the network side device 200 and the terminal 300, a size of a QUIC data packet that needs to be sent to the terminal 300. For example, when obtaining the size of the QUIC data packet that is sent to the terminal 300, the network side device 200 may determine a size of a to-be-sent QUIC data packet that is currently buffered in the network side device. If the QUIC data packet is overlarge, the network side device 200 may process a QUIC data packet that does not meet a transmission requirement in a concatenation or segmentation manner, to obtain a QUIC data packet that meets the requirement. Specifically, the processing may be implemented at the first protocol layer or the second protocol layer of the network side device 200.

In another embodiment of the present invention, when the network side device 200 receives the QUIC data packets that are sent by the server 100, if the QUIC data packet that is sent by the server 100 and that is received by the network side device 200 includes QUIC data packets of a plurality of service types, the first protocol layer of the network side device 200 may further sort the QUIC data packets based on the service types of the QUIC data packets. The QUIC data packets of different service types are differentiated by using at least one parameter of a CID, a source and/or destination port number, a source and/or destination IP address, and an identifier of a QUIC connection. That the service types are differentiated by using a CID is used as an example. The first protocol layer may preferentially send, based on priorities of predetermined service types, QUIC data packets that are received in a connection identified by a CID with a high priority to the second protocol layer. In addition, the first protocol layer may further send QUIC data packets to the second protocol layer based on a quality of service (Quality of Service, QoS) parameter and a delay requirement of a service that is carried in the QUIC data packet. For example, the first protocol layer preferentially sends a QUIC data packet with a high delay requirement to the second protocol layer. Optionally, after the QUIC data packets are sorted based on the service type, data packets of a same service type are sent to the second protocol layer after being sorted based on a sorting manner of the SN in the foregoing embodiment.

In another embodiment of the present invention, when the network side device 200 receives the QUIC data packets that are sent by the server 100, the network side device 200 may further determine, based on moments at which the QUIC data packets reach the first protocol layer, a QUIC data packet that is received in a connection identified by a specific CID and that is first sent to the second protocol layer. For example, after the network side device 200 receives a plurality of QUIC data packets of a plurality of CIDs that are sent by the server 100, the first protocol layer of the network side device 200 sorts the QUIC data packets of different CIDs based on the CID. The network side device 200 monitors moments at which the QUIC data packets reach the first protocol layer, obtains a CID corresponding to a QUIC data packet that first reaches the first protocol layer, and preferentially sends the sorted QUIC data packets corresponding to the CID to the second protocol layer.

In another embodiment of the present invention, in a process in which the network side device 200 sends the QUIC data packets to the terminal 300, the QUIC data packets are sent based on a sorting result of the QUIC data packets in the foregoing embodiment. For example, if the network side device 200 sorts the plurality of QUIC data packets corresponding to the target CID in ascending order of SNs, the network side device 200 also sends the QUIC data packets to the terminal 300 in ascending order of SNs. This ensures that the terminal 300 receives, in a normal sequence, the QUIC data packets that are sent by the network side device 200, and avoids disorder of receiving the QUIC data packets.

In another embodiment of the present invention, to determine whether a data packet that is sent by the server 100 to the network side device 200 is the QUIC data packet, this embodiment of the present invention further provides a QUIC data packet identification manner, which includes the following manners.

Manner 1: It is identified in the network side device 200 whether a received data packet is the QUIC data packet.

Specifically, when the data packet that is received by the network side device 200 meets the following requirements, it may be determined that the received data packet is the QUIC data packet.

In the data packet that is received by the network side device 200, if an IP protocol in an IP packet header is indicated as the UDP, payload (payload) of the received UDP data packet continues to be identified. First, a length of a CID is determined based on a format of a QUIC packet header, to identify data packets of a same CID field. When it is determined that CID fields are the same, it is determined that an SN field is changed consecutively in a specific range. For example, first eight bits (namely, a public flag field in the QUIC packet header) in the UDP payload are first determined, the length of the CID field in the data packet is obtained based on a value of a public flag, and a size of the CID is obtained. The foregoing determining is repeated in each data packet. In addition, when it is determined that CIDs of the data packets are the same, an SN field (there may further be a version field which is skipped) after the public field and the CID field continues to be determined. If the field is incremental in a specific range (for example, the field is incremental from 0 to 255. Not all packets are incremental due to out-of-order transmission, but the packets remain incremental in a statistic period), it indicates that the received data packet is the QUIC data packet.

It should be noted that in the foregoing process, determining of the SN is not mandatory, and the received data packet may also be identified as the QUIC data packet when it is determined that the CID fields of the data packets remain the same. Determining of a protocol type is more accurate through the determining of the SN field. In addition, the QUIC protocol is being further evolved, and names of the foregoing fields and locations of the foregoing fields in packet headers may vary with evolution of the protocol. However, the QUIC data packet can still be identified by determining continuity of a data transmission sequence number in a connection.

Manner 2: Another node is used to assist the network side in identifying whether the received data packet is the QUIC data packet.

In this embodiment of the present invention, specifically, the server 100 or the terminal 300 may be used as assistance for identifying.

Specifically, it is determined, based on the indication in the received data packet, that the received data packet is the QUIC data packet. For example, the IP protocol in the IP packet header of the QUIC data packet that is sent by the server 100 to the network side device 200 indicates that the data packet is the QUIC data packet. Alternatively, the network side device 200 receives an IP address list (IP address list) and/or a UDP port list (UDP port list) corresponding to connections of the QUIC data packets that are sent by the server 100 and/or the terminal 300. When the network side device 200 receives the data packet, the network side device 200 determines, based on the UDP port list and/or the IP address list, whether the IP address and/or the UDP port in the received data packet is in the list (the list includes information about at least one address and/or port number). If the IP address and/or the UDP port in the received data packet is in the list, it is determined that the received data packet is the QUIC data packet, and otherwise, the received data packet is a non-QUIC data packet. For example, the data packet may be another data packet of the real-time transport protocol (Real-time Transport Protocol, RTP) that is carried in the UDP protocol. It should be noted that the IP address or the UDP port number in the present invention may be for only a source end, only a destination end, or may be for both the source end and the destination end. This is not described subsequently.

Manner 2: A dedicated bearer is established for the QUIC to identify the QUIC data packet.

When a bearer of the network side is established, the network side device 200 usually obtains a service type and a service feature of the data packet. When the bearer is established, the service data packet that the network side device 200 obtains is carried on the QUIC, and a dedicated bearer is established for the service. The service may not share a bearer with the non-QUIC data packet of another transport layer protocol. Therefore, the network side device 200 may identify a type of the data packet by using an identifier of the bearer or an identifier of the network side device 200.

In addition, if the IP protocol in the IP packet header of the data packet is indicated as the UDP, and an RLC of the bearer is in an acknowledge mode (Acknowledge Mode, AM), or the service is a web or a video, the network side device 200 may also identify that the data packet is the QUIC data packet.

It should be noted that in this embodiment of the present invention, that the network side device 200 sends the QUIC data packets that are sent by the server 100 to the terminal 300 is used as an example for description. The data packet in this embodiment may also be a data packet of another protocol type. This is not limited in this embodiment of the present invention.

The embodiments of the present invention are mainly applied to a mobile communications system, and an architecture of the system includes user equipment, a server, and a network side device. The server is a device that provides service data, may be a third party service server, a node of a core network, or a server that provides service data and that belongs to an operator. The network side device may be a generic name of a radio access network (Radio Access Network, RAN) device and a core network device, or is the radio access network device or the core network device. Alternatively, the network side device may also be any relay device in a service data transmission process, and therefore, the relay device may also be user equipment. Further, the network side device may further be divided into two logical functional entities: a control plane and a user plane, which are not differentiated in this embodiment of the present invention. In actual application, a function of the network side device that is introduced in this solution may be placed in the control plane functional entity or the user plane functional entity. This is not limited herein.

It should be noted that, in the foregoing embodiment of the present invention, a specific scenario is used for ease of description. Another embodiment of the present invention may further be applied to a data transmission process between any network nodes. This is not limited in this embodiment of the present invention.

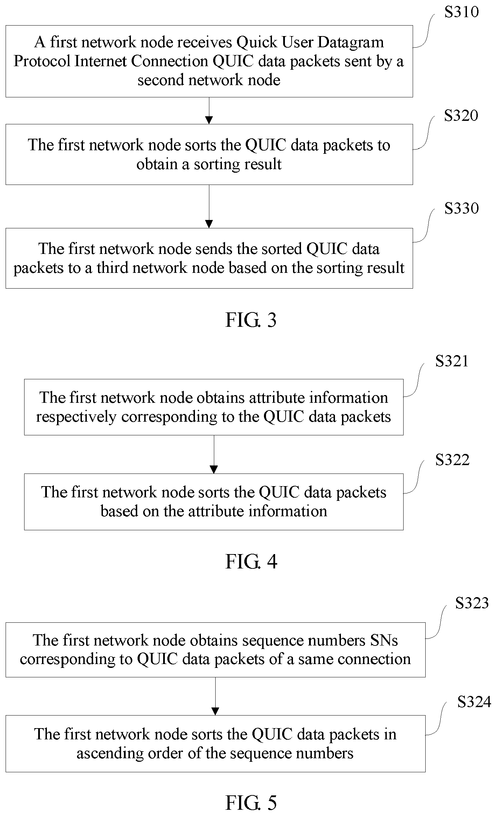

To specifically describe an execution procedure of the network side device 200 in the foregoing embodiments, as shown in FIG. 3, a data transmission method is provided in another embodiment of the present invention, and the method includes the following steps.

In step S310, a first network node receives QUIC data packets sent by a second network node.

The first network node in this embodiment of the present invention is equivalent to the network side device 200 in the foregoing embodiment, and the second network node is equivalent to the server 100 in the foregoing embodiment. A third network node in the following is equivalent to the terminal 300 in the foregoing embodiment, but the embodiments of the present invention are not limited to the application scenario in the foregoing embodiment.

That the first network node receives the QUIC data packets sent by the second network node may be that the first network node receives QUIC data packets sent by a same second network node, or receives QUIC data packets sent by a plurality of second network nodes.

In step S320, the first network node sorts the QUIC data packets to obtain a sorting result.

Optionally, before step S320, the method further includes: determining, by the first network node, whether to sort the QUIC data packets. Specifically, if a sorting functional entity buffer of the first network node does not include the QUIC data packet, or includes only a few QUIC data packets, the first network node does not perform a sorting function.

In step S330, the first network node sends the sorted QUIC data packets to a third network node based on the sorting result.

With reference to the foregoing embodiments, the QUIC data packet is transmitted between the first network node and the second network node by using the QUIC in a multiplex manner, and the QUIC data packet is transmitted between the first network node and the third network node by using one bearer in a wireless manner.

Therefore, when a data transmission rate between the second network node and the first network node is higher than a data transmission rate between the first network node and the third network node, in other words, when air interface resources between the first network node and the third network node are relatively insufficient, the first network node buffers the data packets on a first network node side (or in a sorting function buffer of the first network node) when receiving the data packets sent by the second network node. The first network node sorts received QUIC data, and sends the QUIC data packets to the third network node based on the sorting result, to avoid disorder of the QUIC data packets received by the third network node when the air interface resources that can be allocated to the third network node are limited, which causes a delay in data packet processing when a transport layer or an application layer has a requirement of receiving the data packets in sequence.

To specifically describe how the first network node sorts the received QUIC data packets, and how the first network node sorts connections through which the QUIC data packets are sent, as detailing of the method in FIG. 3, in another embodiment of the present invention, as shown in FIG. 4, step S320 may further include the following steps.

In step S321, the first network node obtains attribute information corresponding to the QUIC data packets.

In step S322, the first network node sorts the QUIC data packets based on the attribute information. The attribute information includes one or a combination of the following items: an identifier of a QUIC connection, a transmission delay requirement of a service transmitted through the QUIC connection, and a service type of the service transmitted through the QUIC connection.

In addition, in this embodiment of the present invention, if QUIC connections of same attribute information include a plurality of QUIC data packets, and because each QUIC data packet is corresponding to one SN, the QUIC data packets of the same attribute information may be sorted based on sizes of SNs.

Therefore, in step S323, after sorting the QUIC data packets based on the attribute information, the first network node sorts data packets that belong to the connections of same attribute information in ascending order of SNs.

The QUIC data packets are first sorted based on the attribute information of the QUIC data packets, and then the QUIC data packets of the same attribute information are sorted based on sizes of the SNs, to obtain a final sorting result of the QUIC data packets.

With reference to the foregoing embodiments, in this embodiment of the present invention, after the attribute information of the QUIC data packets is obtained, a scheduling priority of the QUIC data packet is determined based on the attribute information of the QUIC data packets. Therefore, QUIC data packets of high priorities may be preferentially sorted, so that the QUIC data packets of high priorities can be sent to the third network node in a timely manner, thereby reducing a negative gain of user experience.

It should be noted that the foregoing attribute information is used to determine a priority of the QUIC connection or a QUIC stream, and the priority is usually determined based on a service type and subscription information in a wireless network system. Therefore, the foregoing attribute information may further include the subscription information. In the foregoing embodiment, after the first network node obtains the attribute information, and obtains processing priorities of different QUIC data packets based on the attribute information, a first network side device obtains priority information corresponding to different attribute information. The information may be determined based on policy information of a network provider, may be determined based on the subscription information, or may be determined based on a service type.

To specifically describe how the first network node sorts the received QUIC data packets, as detailing of the method in FIG. 3, in another embodiment of the present invention, as shown in FIG. 5, step S320 may further include the following steps.

In step S323, the first network node obtains sequence numbers (SNs) corresponding to QUIC data packets of a same connection.

In step S324, the first network node sorts the QUIC data packets in ascending order of the sequence numbers.

The SN in the QUIC data packet represents a sending sequence of data. When the first network node receives QUIC data packets sent by the second network node in a multiplex manner, some QUIC data packets that are sent later may reach the first network node earlier, and some QUIC data packets that are sent earlier may reach the first network node later, which is determined by routing node selection of each transmission and a sending policy of a passed routing node, and the QUIC data packet may not reach the first network node based on a sending sequence. Therefore, the first network node needs to sort the received QUIC data packets of a same connection based on the SN, to send the QUIC data packets to the third network node based on a sorting result.

It should be noted that the foregoing sorting process is performed when the first network node receives the QUIC data packets, and currently, the first network node cannot send the QUIC data packets that are sorted. If the first network node has a resource to send the data packet, preferably, even if the sorting is not completed, the QUIC data packets are sent to the third network node, to ensure timeliness of data transmission.

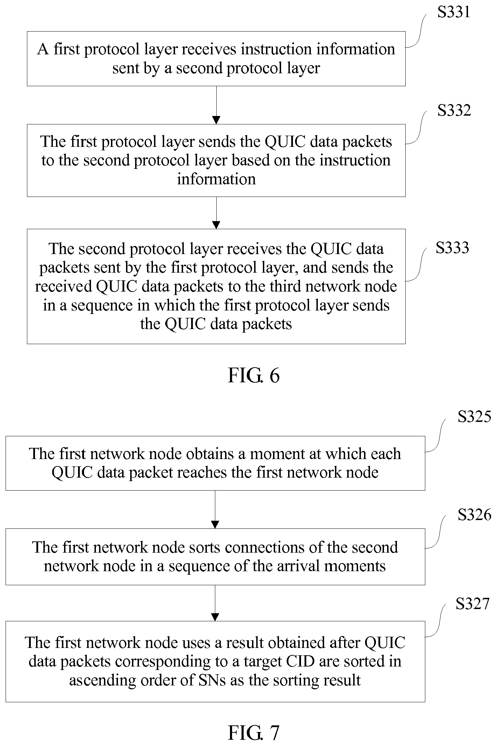

To specifically describe how the first network node sends the QUIC data packets to the third network node based on the sorting result, as detailing of the method in FIG. 3, as shown in FIG. 6, in another embodiment of the present invention, the first network node includes a first protocol layer and a second protocol layer, the first protocol layer is used to sort the QUIC data packets, the second protocol layer is used to send the sorted QUIC data packets, and step S330 may further include the following steps.

In step S331, the first protocol layer receives instruction information sent by the second protocol layer.

The instruction information is used to instruct the first protocol layer to send QUIC data packets requested by the second protocol layer to the second protocol layer.

In step S332, the first protocol layer sends the QUIC data packets to the second protocol layer based on the instruction information.

In step S333, the second protocol layer receives the QUIC data packets sent by the first protocol layer, and sends the received QUIC data packets to the third network node in a sequence in which the first protocol layer sends the QUIC data packets.

When the network side device 200 receives the QUIC data packets sent by the server 100, the first protocol layer of the network side device 200 may further send the QUIC data packets based on the instruction information sent by the second protocol layer. Specifically, the first protocol layer receives the instruction information sent by the second protocol layer. The instruction information includes QUIC data packets of specific connections that the second protocol layer currently needs to receive, sizes of QUIC data packets that the second protocol layer needs to receive, or the like. Alternatively, the first protocol layer may further perform evaluation based on a size of a buffer of the second protocol layer, and determine, based on an evaluation result, a size and a quantity of QUIC data packets that are sent to the second protocol layer.

It should be noted that the first protocol layer and the second protocol layer that are described above are merely a function division manner of the first network node, and there may further be a plurality of protocol layer division manners based on a specific system. This is not limited herein. Data packets of the first protocol layer that are requested or received by the second protocol layer may also be referred to as first protocol layer data packets. The first protocol layer data packet includes QUIC data packets to which packet header information of the first protocol layer is added. For ease of description, the first protocol layer data packet is referred to as the QUIC data packet in this patent application.

To specifically describe how the first network node sorts the received QUIC data packets, as detailing of the method in FIG. 3, in another embodiment of the present invention, the first network node receives QUIC data packets of a plurality of connections that are sent by the second network node. Each connection in the plurality of connections is corresponding to one connection identifier (CID), and as shown in FIG. 7, step S320 may further include the following steps.

In step S325, the first network node obtains a moment at which each QUIC data packet reaches the first network node.

The first network node sorts the plurality of connections in a sequence of moments at which first QUIC data packets of all connections reach the first network node, to determine a connection corresponding to the QUIC data packet that first reaches the first network node as a first connection, and determine a CID corresponding to the first connection as a target CID.

In step S326, the first network node sorts the connections of the second network node in a sequence of the arrival moments.

In step S327, the first network node uses a result obtained after the QUIC data packets corresponding to the target CID are sorted in ascending order of SNs as the sorting result.

In another embodiment of the present invention, when a network side device receives QUIC data packets of a plurality of connections, the network side device may further determine a sorting result of the connections in a sequence of moments at which the QUIC data packets reach the first protocol layer. In this embodiment, a QUIC data packet that first reaches the first protocol layer is first determined, then a CID corresponding to the QUIC data packet that first reaches the first protocol layer is used as a target CID, and QUIC data packets corresponding to the target CID are sorted in ascending order of SNs, to obtain the sorting result. The first protocol layer sends the QUIC data packets corresponding to the target CID to the second protocol layer based on the ascending sorting result. In this embodiment of the present invention, QUIC data packets corresponding to each CID may be sorted, and a sorting result of QUIC data packets corresponding to the target CID is obtained.

In another embodiment of the present invention, when a network side device receives QUIC data packets of a plurality of connections, the network side device may further determine the sorting result of the connections in the sequence of moments at which the QUIC data packets reach the first protocol layer. In this embodiment, a moment at which a QUIC data packet in each connection first reaches the first protocol layer is first determined, then a CID corresponding to the QUIC data packet that first reaches the first protocol layer is selected as a target CID, QUIC data packets corresponding to the target CID are sorted in ascending order of SNs, and a first sorted QUIC data packet corresponding to the target CID is selected as a target data packet, and is stored in a to-be-sent buffer. The first protocol layer performs the foregoing operation on each data packet until a sorting result of a plurality of QUIC data packets from a plurality of connections is obtained.

For example, after the network side device receives the plurality of QUIC data packets corresponding to the plurality of CIDs that are sent by the server, the first protocol layer of the network side device classifies the received QUIC data packets based on the CIDs, and sorts the QUIC data packets, for example, CID 5 (SN 1, SN 2, SN 3...) and CID 8 (SN 10, SN 11, SN 12...). The network side device monitors moments at which the QUIC data packets reach the first protocol layer, and sends the sorted QUIC data packets to the second protocol layer in a sequence of the arrival moments. For example, the CID corresponding to the QUIC data packet that first reaches the first protocol layer is obtained, and the sorted QUIC data packets corresponding to the CID are preferentially sent to the second protocol layer.

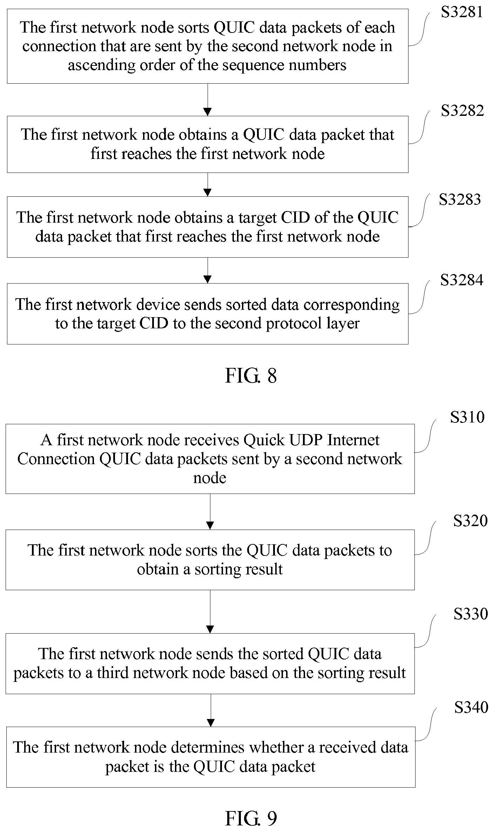

To specifically describe how the first network node sorts the received QUIC data packets, as detailing of the method in FIG. 3, in another embodiment of the present invention, the first network node receives a plurality of QUIC data packets sent through a plurality of connections. Each data packet in the plurality of QUIC data packets carries a connection identifier (CID) of the second network node, and as shown in FIG. 8, step S320 may further include the following steps.

In step S3281, the first network node sorts QUIC data packets of each connection that are sent by the second network node in ascending order of the sequence numbers.

In step S3282, the first network node obtains a QUIC data packet that first reaches the first network node.

In step S3283, the first network node obtains a target CID of the QUIC data packet that first reaches the first network node.

In step S3284, the first network device sends sorted data corresponding to the target CID to the second protocol layer.

It should be noted that in step S3284, that the first network device sends the sorted data corresponding to the target CID to the second protocol layer may be:
The first network device sends sorted data packets corresponding to the target CID to the second network side device. In other words, during each transmission, a to-be-sent CID is determined based on an arrival moment of a first data packet of each CID, and data packets of the CID in the buffer are preferentially sent based on a data amount that can be sent; or
a target CID is determined, based on step S3282 and step S3283, each time one QUIC data packet is sent until the data amount that can be sent meets a requirement.

In another embodiment of the present invention, when the network side device receives a plurality of QUIC data packets of a plurality of connections, QUIC data packets in each of the plurality of QUIC data packets are sorted based on SNs, to obtain a sorting result of each of the plurality of QUIC data packets.

The network side device obtains moments at which the QUIC data packets reach the first protocol layer, determines, based on the arrival moments, a QUIC data packet that first reaches the first protocol layer, determines a CID corresponding to the QUIC data packet that first reaches the first protocol layer, and uses a sorting result of QUIC data packets corresponding to the CID as a sorting result of QUIC data packets that are sent by the first protocol layer to the second protocol layer.

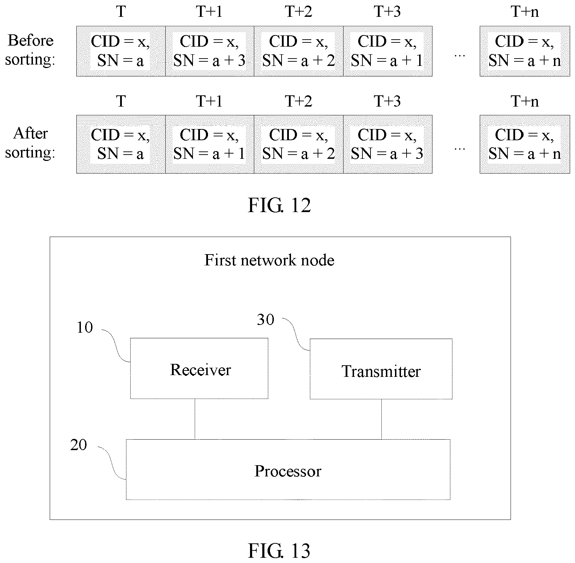

FIG. 12 is a schematic diagram of data sorting according to an embodiment of the present invention.

In this embodiment of the present invention, SNs are sorted in ascending order in a data packet sorting process, but a receiving time of the data packet does not vary with the SN. In FIG. 12, x, a, and n are positive integers, and T is a positive number or 0.

For a CID that has corresponding QUIC data packets, after the QUIC data packets for data of each CID are sorted in a manner of the foregoing embodiments of the present invention, when the first protocol layer in the network side device transmits the QUIC data packet to the second protocol layer based on the sorting result, the CID is first selected based on a time sequence, to be specific, a CID corresponding to QUCI data that first reaches the first protocol layer is selected, and then the QUIC data packets corresponding to the CID are sent to the second protocol layer.

Alternatively, when data is transmitted to the second protocol layer, the QUIC data packets are sorted and sent again based on time. In other words, after receiving the data packets, the first protocol layer sorts the data packets in a sequence of the SN for sending. When the data packets are sent, data (CID v, SN g) is selected for sending based on a time sequence.

In this embodiment, the QUIC data packets may be sorted based on the time sequence. In another embodiment of the present invention, CID priorities corresponding to different QUIC data packets may further be set based on a service type, or the like, and a QUIC data packet corresponding to a CID with a higher priority is preferentially sent based on a sorting result.

In this embodiment, parameters through which the QUIC data packets are determined to be sorted include attribute information, an arrival time of a first to-be-sent data packet, a sequence number of the QUIC data packet, and the like. Specifically, connections are first sorted based on the attribute information, connections are sorted based on an arrival time of a first data packet when the attribute information is the same, and QUIC data packets corresponding to a same connection are sorted based on the SN when the connections are the same. In a sending process of the first network side device, a to-be-sent connection is first determined based on the attribute information and time information, and the foregoing sorting result, and then data of the connection that needs to be sent is determined.

As detailing of the method in FIG. 3, in another embodiment of the present invention, as shown in FIG. 9, the method may further include the following steps.

In step S340, the first network node determines whether a received data packet is the QUIC data packet.

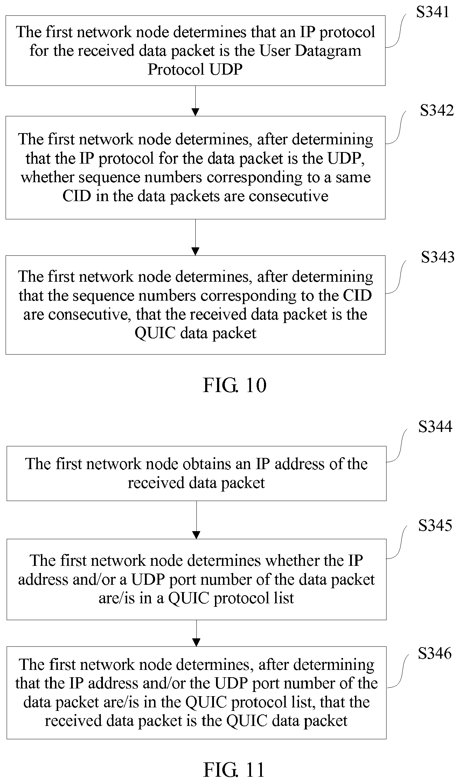

As shown in FIG. 10, step S340 may include the following steps.

In step S341, the first network node determines that an IP protocol for the received data packet is the user datagram protocol (UDP).

In step S342, the first network node determines, after determining that the IP protocol for the data packet is the UDP, whether sequence numbers corresponding to a same CID in the data packets are consecutive.

In step S343, the first network node determines, after determining that the sequence numbers corresponding to the CID are consecutive, that the received data packet is the QUIC data packet.

In the data packets received by the network side device, if an IP protocol in an IP packet header is indicated as the UDP, payload (payload) of a received UDP data packet is identified, and it is determined, based on a format of a QUIC packet header, that an SN field is changed consecutively for a same CID. For example, first, consecutive eight bits after a UDP packet header are determined, a public flag of the QUIC packet header is identified to obtain a length of the CID, and a size of the CID is obtained based on the length. The foregoing determining is repeated in subsequent data packets. In addition, it is determined that the SN is incremental in a specific range for a same CID (not all packets are incremental due to out-of-order transmission, but the packets remain incremental in a statistic period).

It should be noted that in the foregoing process, the received data packet may also be identified as the QUIC data packet when it is determined that the CID fields of the data packets remain the same. Determining of a protocol type is more accurate through the determining of the SN field.

As detailing of the method in FIG. 9, in another embodiment of the present invention, as shown in FIG. 11, step S340 may further include the following steps.

In step S344, the first network node obtains an IP address of the received data packet.

In step S345, the first network node determines whether the IP address and/or a UDP port number of the data packet are/is in a QUIC protocol list.

Specifically, before step 344, the first network node obtains a QUIC protocol address list, and the list is a set of the IP address and/or the UDP port number corresponding to a QUIC connection. Optionally, the list is sent to the first network node by the second network node or the third network node. The first network node determines, based on the information, whether the received data packet is the QUIC data packet.

In step S346, the first network node determines, after determining that the IP address and/or the UDP port number of the data packet are/is in the QUIC protocol address list, that the received data packet is the QUIC data packet.

In this embodiment of the present invention, specifically, the server 100 or the terminal 300 may be used as assistance for identifying.

Specifically, it is determined, based on the indication in the data packet, that the received data packet is the QUIC data packet. For example, the IP protocol in the IP packet header of the QUIC data packet that is sent by the server to the network side device indicates that the data packet is the QUIC data packet. Alternatively, the network side device receives an IP address (IP address) and/or a UDP port list (UDP port list) used by the QUIC protocol data packet sent by a sender of the data packet. When the network side device receives the data packet, the network side device determines, based on the UDP port list, whether the IP address in the received data packet is in the UDP port list. If the IP address in the received data packet is in the UDP port list, it is determined that the received data packet is the QUIC data packet, and otherwise, the received data packet is a non-QUIC data packet. For example, the data packet may be another data packet of the RTP that is carried in the UDP protocol.

As detailing of the method in FIG. 9, in another embodiment of the present invention, the method may further include the following steps.

In step S350, the first network node sends, after determining that a buffer of the QUIC data packet exceeds a preset threshold, instruction information to the second network node.

When the QUIC data packet buffered in the first network node exceeds the preset threshold, the second network node continues to send the QUIC data packet to the first network node, and consequently, the first network node discards the QUIC data packet. To avoid the foregoing case, in this embodiment of the present invention, when the second network node receives the instruction information sent by the first network node, the second network node stops sending the QUIC data packet to the first network node based on the instruction information sent by the first network node, or the second network node decreases a rate of sending the QUIC data packet to the first network node. The instruction information is sent through a signaling transmission channel between the first network node and the second network node, or is carried in an uplink QUIC data packet header.

Alternatively, in step S360, the first network node sets buffer space of a preset capacity for the QUIC data packet sent by the second network node. Specifically:
The first network node determines the established bearer as a transmission bearer of the QUIC protocol data packet. Optionally, the first network node receives a recommended buffer size of the QUIC data packet or information about a rate at which the second network node sends data to the first network node.

The first network node determines a size of the buffer for the transmission bearer of the QUIC protocol data packet.

In addition, in this embodiment of the present invention, if original buffer space of the first network node is limited, the first network node may further specially set, based on a requirement, buffer space of a specific capacity for the QUIC data packet sent by the second network node. A size of the capacity may be set based on a requirement. Therefore, when the buffer space of the QUIC data packet is large enough, all QUIC data packets sent by the second network node may be stored in the buffer space, to avoid a case in which the received QUIC data packet needs to be discarded because buffer space of the QUIC data packet is excessively small, and further avoid discarding of the QUIC data packet.

Alternatively, in step S370, the first network node discards the QUIC data packet in a reverse order based on the sorting result.

In this embodiment of the present invention, if space of the first network node that is used to buffer the QUIC data packet is insufficient to buffer the received QUIC data packet, a QUIC data packet that cannot be buffered needs to be discarded. A QUIC data packet with a larger SN is preferentially discarded, to avoid missing of a QUIC data packet received by the first network node because a QUIC data packet with a smaller SN is discarded.

Based on the foregoing descriptions of the method embodiments, a person skilled in the art may clearly understand that the present invention may be implemented by software in addition to a necessary universal hardware platform or by hardware only. In most circumstances, the former is a better implementation. Based on such an understanding, the technical solutions of the present invention essentially, or the part contributing to the prior art may be implemented in a form of a software product. The software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a read-only memory (ROM), a random access memory (RAM), a magnetic disk, or an optical disc.

As an implementation of the foregoing methods, in another embodiment of the present invention, a first network node is further provided. As shown in FIG. 13, the first network node includes:
a receiver 10, configured to receive quick user datagram protocol internet connection (QUIC) data packets sent by a second network node;
a processor 20, configured to sort the QUIC data packets, to obtain a sorting result; and
a transmitter 30, configured to send the QUIC data packets to a third network node based on the sorting result.

In another embodiment of the present invention, the receiver 10 is further configured to obtain attribute information respectively corresponding to connections of the QUIC data packets; and
the processor 20 is further configured to sort the connections based on the attribute information, where
the attribute information includes one or a combination of the following items:
an identifier of a QUIC connection, a transmission delay requirement of a service transmitted through the QUIC connection, and a service type of the service transmitted through the QUIC connection.

In another embodiment of the present invention, the receiver 10 is further configured to obtain sequence numbers (SNs) corresponding to the QUIC data packets of a same connection; and
the processor 20 is further configured to sort the QUIC data packets in ascending order of the sequence numbers.

In another embodiment of the present invention, the first network node includes a first protocol layer and a second protocol layer, the first protocol layer is used to sort the data packets, and the second protocol layer is used to send the sorted QUIC data packets;
the receiver 10 is further configured to receive instruction information sent by the second protocol layer, where the instruction information is used to instruct the first protocol layer to send QUIC data packets requested by the second protocol layer to the second protocol layer;
the transmitter 30 is further configured to send the QUIC data packets to the second protocol layer based on the instruction information; and
the receiver 10 is further configured to: receive the QUIC data packets sent by the first protocol layer, and send the received QUIC data packets to the third network node in a sequence in which the first protocol layer sends the QUIC data packets.

In another embodiment of the present invention, the first network node receives the QUIC data packets that are sent by the second network node and that are from a plurality of connections, and each data packet in the QUIC data packets of the plurality of connections has a corresponding sequence number SN and a corresponding connection identifier (CID);
the receiver 10 is further configured to receive the QUIC data packets that are sent by the second network node and that are from the plurality of connections, where each connection is identified by a unique CID;
the processor 20 is further configured to: obtain a moment at which each QUIC data packet reaches the first network node; and sort, by the first network node, the plurality of connections in a sequence of moments at which first QUIC data packets of all connections reach the first network node, to determine a connection corresponding to the QUIC data packet that first reaches the first network node as a first connection, and determine a CID corresponding to the first connection as a target CID;
the processor 20 is further configured to sort QUIC data packets corresponding to the target CID in ascending order of SNs; and
the processor 20 is further configured to use a result obtained after the QUIC data packets corresponding to the target CID are sorted as the sorting result.

In another embodiment of the present invention, the processor 20 is further configured to determine whether a received data packet is the QUIC data packet;
the processor 20 is further configured to determine that an IP protocol for the received data packet is the user datagram protocol (UDP);
the processor 20 is further configured to determine, after determining that the IP protocol for the data packet is the UDP, whether sequence numbers corresponding to a same CID in the data packets are consecutive; and
the processor 20 is further configured to determine, after determining that the sequence numbers corresponding to the CID are consecutive, that the received data packet is the QUIC data packet.

In another embodiment of the present invention, the receiver 10 is further configured to obtain an IP address of the received data packet;
the processor 20 is further configured to determine whether the IP address of the data packet is in a UDP port list; and
the processor 20 is further configured to determine, after determining that the IP address of the data packet is in a QUIC protocol address list, that the received data packet is the QUIC data packet.

In another embodiment of the present invention, after the first network node determines that the received data packet is the QUIC data packet, the first network node further includes:
the transmitter 30 is further configured to send, after determining that a buffer of the foregoing QUIC data packet exceeds a preset threshold, instruction information to the second network node, so that the second network node stops sending the QUIC data packet to the first network node based on the instruction information, or the second network node decreases a rate of sending the QUIC data packet to the first network node; or
the processor 20 is further configured to set buffer space of a preset capacity for the QUIC data packet sent by the second network node; or
the processor 20 is further configured to discard the QUIC data packet based on the sorting result in descending order of sequence numbers.

For the apparatus in the foregoing embodiment, specific manners of executing operations by each module are described in detail in the embodiments related to the method, and details are not described herein.

It is understandable that the present invention is applicable to environments or configurations of a plurality of universal or dedicated computing systems. For example, a personal computer, a server computer, a handheld device or a portable device, a flat panel device, a multi-processor system, a microprocessor-based system, a set-top box, a programmable consumer electronic device, a network PC, a minicomputer, a mainframe computer, and a distributed computing environment including any one of the foregoing systems or devices.

The present invention can be described in the general context of executable computer instructions executed by a computer, for example, a program module. Generally, the program module includes a routine, program, object, component, data structure, and the like for executing a particular task or implementing a particular abstract data type. The present invention may also be practiced in distributed computing environments in which tasks are performed by remote processing devices that are connected through a communications network. In a distributed computing environment, program modules may be located in both local and remote computer storage media including storage devices.

It should be noted that in this specification, relational terms such as first and second are only used to distinguish one entity or operation from another, and do not necessarily require or imply that any actual relationship or sequence exists between these entities or operations. Moreover, the terms "include", "comprise", or any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element preceded by "includes a ..." does not, without more constraints, preclude the existence of additional identical elements in the process, method, article, or apparatus that includes the element.

A person skilled in the art can easily figure out another implementation solution of the present invention after considering the specification and practicing the present invention that is disclosed herein. This application is intended to cover any variations, functions, or adaptive changes of the present invention. These variations, functions, or adaptive changes comply with general principles of the present invention, and include common knowledge or a commonly used technical means in the technical field that is not disclosed in the present invention. The specification and the embodiments are merely considered as examples, and the actual scope and the spirit of the present invention are pointed out by the following claims.

It should be understood that the present invention is not limited to the accurate structures that are described in the foregoing and that are shown in the accompanying drawings, and modifications and changes may be made without departing from the scope of the present invention. The scope of the present invention is limited only by the appended claims.

## Claims

1. A data transmission method, comprising:
receiving, by a first network node, quick user datagram protocol internet connection (QUIC) data packets sent by a second network node;
sorting, by the first network node, the QUIC data packets, to obtain a sorting result; and
sending, by the first network node, the QUIC data packets to a third network node based on the sorting result.

2. The method according to claim 1, wherein the sorting, by the first network node, the QUIC data packets specifically comprises:
obtaining, by the first network node, attribute information corresponding to connections of the QUIC data packets; and
sorting, by the first network node, the connections based on the attribute information, wherein
the attribute information comprises one or a combination of the following items:
an identifier of a QUIC connection, a transmission delay requirement of a service transmitted through the QUIC connection, and a service type of the service transmitted through the QUIC connection.

3. The method according to claim 1, wherein the sorting, by the first network node, the QUIC data packets specifically comprises:
obtaining, by the first network node, sequence numbers (SNs) corresponding to the QUIC data packets of a same connection; and
sorting, by the first network node, the QUIC data packets in ascending order of the sequence numbers.

4. The method according to claim 1, wherein the first network node comprises a first protocol layer and a second protocol layer, the first protocol layer is used to sort the data packets, the second protocol layer is used to send the sorted QUIC data packets, and the sending, by the first network node, the QUIC data packets to the third network node based on the sorting result specifically comprises:
receiving, by the first protocol layer, instruction information sent by the second protocol layer, wherein the instruction information is used to instruct the first protocol layer to send QUIC data packets requested by the second protocol layer to the second protocol layer;
sending, by the first protocol layer, the QUIC data packets to the second protocol layer based on the instruction information; and
receiving, by the second protocol layer, the QUIC data packets sent by the first protocol layer, and sending the received QUIC data packets to the third network node in a sequence in which the first protocol layer sends the QUIC data packets.

5. The method according to claim 1, wherein the receiving, by the first network node, the QUIC data packets sent by the second network node specifically comprises:
receiving, by the first network node, the QUIC data packets that are sent by the second network node and that are from a plurality of connections, wherein each connection is identified by a unique connection identifier (CID); and
the sorting, by the first network node, the QUIC data packets comprises:
obtaining, by the first network node, a moment at which each QUIC data packet reaches the first network node; and sorting, by the first network node, the plurality of connections in a sequence of moments at which first QUIC data packets of all connections reach the first network node, to determine a connection corresponding to the QUIC data packet that first reaches the first network node as a first connection, and determine a CID corresponding to the first connection as a target CID;
sorting, by the first network node, QUIC data packets corresponding to the target CID in ascending order of SNs; and
using, by the first network node, a result obtained after the QUIC data packets corresponding to the target CID are sorted as the sorting result.

6. The method according to claim 1, wherein the method further comprises:
determining, by the first network node, that an IP protocol for the received data packet is the user datagram protocol (UDP);
determining, by the first network node after determining that the IP protocol for the data packet is the UDP, whether sequence numbers corresponding to a same CID in the data packets are consecutive; and
determining, by the first network node after determining that the sequence numbers corresponding to the CID are consecutive, that the received data packet is the QUIC data packet.

7. The method according to claim 1, wherein the method further comprises:
obtaining, by the first network node, an IP address of the received data packet;
determining, by the first network node, whether the IP address of the data packet is in a UDP port list; and
determining, by the first network node after determining that the IP address of the data packet is in a QUIC protocol address list, that the received data packet is the QUIC data packet.

8. The method according to claim 6 or 7, wherein after the determining, by the first network node, that the received data packet is the QUIC data packet, the method further comprises:
sending, by the first network node after determining that a buffer of the QUIC data packet exceeds a preset threshold, instruction information to the second network node, so that the second network node stops sending the QUIC data packet to the first network node based on the instruction information, or the second network node decreases a rate of sending the QUIC data packet to the first network node; or
setting, by the first network node, buffer space of a preset capacity for the QUIC data packet sent by the second network node; or
discarding, by the first network node, the QUIC data packet based on the sorting result in descending order of sequence numbers.

9. A first network node, comprising:
a receiver, configured to receive quick user datagram protocol internet connection (QUIC) data packets sent by a second network node;
a processor, configured to sort the QUIC data packets, to obtain a sorting result; and
a transmitter, configured to send the QUIC data packets to a third network node based on the sorting result.

10. The first network node according to claim 9, wherein
the receiver is further configured to obtain attribute information respectively corresponding to connections of the QUIC data packets; and
the processor is further configured to sort the connections based on the attribute information, wherein
the attribute information comprises one or a combination of the following items:
an identifier of a QUIC connection, a transmission delay requirement of a service transmitted through the QUIC connection, and a service type of the service transmitted through the QUIC connection.

11. The first network node according to claim 9, wherein
the receiver is further configured to obtain sequence numbers (SNs) corresponding to the QUIC data packets of a same connection; and
the processor is further configured to sort the QUIC data packets in ascending order of the sequence numbers.

12. The first network node according to claim 9, wherein the first network node comprises a first protocol layer and a second protocol layer, the first protocol layer is used to sort the data packets, and the second protocol layer is used to send the sorted QUIC data packets;
the receiver is further configured to receive instruction information sent by the second protocol layer, wherein the instruction information is used to instruct the first protocol layer to send QUIC data packets requested by the second protocol layer to the second protocol layer;
the transmitter is further configured to send the QUIC data packets to the second protocol layer based on the instruction information; and
the receiver is further configured to: receive the QUIC data packets sent by the first protocol layer, and send the received QUIC data packets to the third network node in a sequence in which the first protocol layer sends the QUIC data packets.

13. The first network node according to claim 9, wherein
the receiver is further configured to receive the QUIC data packets that are sent by the second network node and that are from a plurality of connections, wherein each connection is identified by a unique connection identifier (CID);
the processor is further configured to: obtain a moment at which each QUIC data packet reaches the first network node; and sort, by the first network node, the plurality of connections in a sequence of moments at which first QUIC data packets of all connections reach the first network node, to determine a connection corresponding to the QUIC data packet that first reaches the first network node as a first connection, and determine a CID corresponding to the first connection as a target CID;
the processor is further configured to sort QUIC data packets corresponding to the target CID in ascending order of SNs; and
the processor is further configured to use a result obtained after the QUIC data packets corresponding to the target CID are sorted as the sorting result.

14. The first network node according to claim 9, wherein
the processor is further configured to determine that an IP protocol for the received data packet is the user datagram protocol (UDP);
the processor is further configured to determine that an IP protocol for the received data packet is the User Datagram Protocol UDP;
the processor is further configured to determine, after determining that the IP protocol for the data packet is the UDP, whether sequence numbers corresponding to a same CID in the data packets are consecutive; and
the processor is further configured to determine, after determining that the sequence numbers corresponding to the CID are consecutive, that the received data packet is the QUIC data packet.

15. The first network node according to claim 9, wherein
the receiver is further configured to obtain an IP address of the received data packet;
the processor is further configured to determine whether the IP address of the data packet is in a UDP port list; and
the processor is further configured to determine, after determining that the IP address of the data packet is in a QUIC protocol address list, that the received data packet is the QUIC data packet.

16. The first network node according to claim 14 or 15, wherein after the first network node determines that the received data packet is the QUIC data packet, the first network node further comprises:
the transmitter is further configured to send, after determining that a buffer of the QUIC data packet exceeds a preset threshold, instruction information to the second network node, so that the second network node stops sending the QUIC data packet to the first network node based on the instruction information, or the second network node decreases a rate of sending the QUIC data packet to the first network node; or
the processor is further configured to set buffer space of a preset capacity for the QUIC data packet sent by the second network node; or
the processor is further configured to discard the QUIC data packet based on the sorting result in descending order of sequence numbers.
